# EUROPEAN PATENT SPECIFICATION

(11) **EP 1 301 048 B1**
(45) Date of publication and mention of the grant of the patent: **02.12.2009**
(21) Application number: 01123803.7
(22) Date of filing: 04.10.2001
(51) Int. Cl.: H04W 76/02

(54) **Method for the establishment of a connection in a communication system with different traffic bearers**
Verfahren zum Aufbau einer Verbindung in einem Kommunikationssystem mit verschiedenen Verkehrsträgern
Procédé pour etablir une connexion dans un système de communication avec différentes porteuses de trafic

(43) Date of publication of application: 09.04.2003
(73) Proprietor: TELEFONAKTIEBOLAGET LM ERICSSON (publ), 164 83 Stockholm (SE)
(72) Inventor: Suihko, Timo, 02230 Espoo (FI)
(74) Representative: Tonscheidt, Andreas

(56) References cited:
- EP-A- 1 065 900
- WO-A-00/79827
- WO-A-01/15475

## Description

### Technical field of the invention

The present invention relates to a method according to the preamble of claim 1 and a communication system adapted to perform the method.

### Background of the invention

A mobile communication system is often adapted to different radio bearer technologies, e.g. after a new type of radio access network is added to an existing mobile communication system. The corresponding user equipment can typically establish connections via at least two different types of radio access networks. For example, the user equipment may be adapted to establish both GSM (Global System for Mobile Communication) connections and UMTS (Universal Mobile Telecommunication System) connections which allows users to roam both in GSM and UMTS access networks.

To simplify the structure and maintenance of the communication system and lower costs, preferably a common control node controls the establishment of radio links of the connection to the user equipment for two or more types of radio access networks, for example a combined 2G/3G MSC (2^{nd} Generation / 3^{rd} Generation Mobile Services Switching Center) which is adapted to control both connections according to GSM and UMTS specifications. This allows to upgrade an existing GSM MSC to control also UMTS traffic which is especially advantageous if the MSC has still free capacity. The radio link establishment is generally performed by further nodes in the radio access network according to control messages sent by the control node, e.g. by a BSC (Base Station Controller) or RNC (Radio Network Controller) via a radio base station.

The access networks of the communication system are interconnected by a core network which can also provide access to further networks like, e.g., a further mobile network or a fixed telephone network. Within the core network, different combinations for the traffic bearers and the corresponding control protocol are possible. GSM traffic is preferably carried on ISUP/TDM (Integrated Services digital network User Part/Time Division Multiplex) links to allow the further use of existing infrastructure, the first of the protocols indicating the control protocol and the second one the bearer protocol of a link. UMTS traffic is adapted for transport on BICC/ATM (Bearer Independent Call Control/Asynchronous Transfer Mode) or BICC/IP (Bearer Independent Call Control /Internet Protocol) links.

For connections, e.g. voice calls, originating from the user equipment, a control node like a 2G/3G MSC can be adapted in the existing technology to select different core network bearers depending on the access network where the connection originates.

One or more further control nodes, e.g. a GMSC (Gateway Mobile Services Switching Center) or a TSC (Transit Switching Center), initiate the establishment of one or more further links of the connection in the core network. When a connection terminating at the user equipment is established, the further control nodes in the core network handling a request for the establishment of the connection obtain a roaming number, often denoted as Mobile Station Roaming Number (MSRN). The roaming number is a routing information which allows the routing of an incoming connection to the user equipment in its present position by indicating the control node for the radio access network. Generally, a GMSC is an MSC with the ability to request routing information from a location register of the communication network while a TSC receives a request for the establishment of a connection from a further network with the request comprising the routing information.

The access network in which a mobile connection terminates at the user equipment is not known when the establishment of links in this connection is initiated in the core network unless the control node indicated by the roaming number controls only connections for a single access network. Further control nodes are not aware in which access network a connection ends if the roaming number indicates a common control node as interface to the access network.

Therefore, it cannot be distinguished between GSM and UMTS terminating traffic within the core network if the roaming number indicates only a common control node, i.e. a combined 2G/3G MSC, for terminating connections. It is not known whether a connection ends up in a UMTS or GSM access network until the connection has reached this control node. For example in a core network which is in part ATM based and in part TDM based, it is not possible to make a difference between GSM and UMTS terminating connections.

To allow an optimum connection handling, one option is to select the more advanced transport protocol for all connections. However, this approach has the disadvantage that existing equipment adapted to a previous transport protocol cannot be used anymore or must be upgraded at high costs if this is possible at all. Therefore, this option is generally too expensive, especially as common control nodes are installed for cost reasons. A re-routing of the connection after establishment to achieve a balanced loading of different network parts and bearers is generally impossible or would require excessive signaling and time.

To track the position of user equipment within the coverage area of a mobile communication system, location areas are defined, typically comprising the coverage area of one or more radio base stations. A location area (LA) indicates the area in which a user equipment can move freely without update of the location information which is preferably stored in the control node controlling connections for the user equipment. Typically, adjacent location areas overlap. Location updates can be performed by messages between the user equipment and the control node, e.g. in regular intervals or if a user equipment detects that it has entered a new location area. A location area is identified by a location area identity.

International application WO 01/15475 A1 discloses a network architecture in which the location areas supported by different types of radio access networks may coincide. Instead of being connected only to a single core network, a radio access network can be connected to control nodes in different core networks to provide an improved service. According to this application, location area identifiers transmitted by the core networks may indicate the core network.

To enable the use of user equipment either as an IP terminal or a voice terminal, application EP 1 065 900 A1 discloses that different transmission paths with different transmission protocols can be used in a connection with the user equipment, especially circuit and packet switched paths. The operator, e.g. of a UMTS telecommunication system, can decide upon a policy to determine the path selection process. The user equipment is provided with a single address regardless of the path over which a call is routed. An enhanced visitor location area assigns a mobile station roaming number based on the decision which path should be used for the call. A gateway MSC then routes the call on a path determined by the roaming number. Irrespective of the selected path, the connection is transmitted over the same radio access network to the user equipment.

However, both applications do not address the above problem to allow optimum connections with the user equipment irrespective of the present radio access while using the existing core network capacity in an efficient way.

### Summary and description of the invention

It is an object of the present invention to obviate the above disadvantages and provide a method for the establishment of a connection in a mobile communication system which allows both to select an optimum bearer in the core network and the further use of existing equipment.

According to the invention, the method described in claim 1 is performed. Furthermore, the invention is embodied in a communication system as described in claim 11.

In the proposed method for the establishment of a connection in a mobile communication system, a user equipment is adapted to connections over different types of radio access networks. The user equipment can be for example a mobile phone or any other terminal which can establish connections with the communication system. The type of the radio access network can especially indicate whether the radio access network is adapted to interconnection, especially with nodes in the core network, via circuit switched connections on a time division multiplex bearer or to packet switched connections.

A connection comprises two or more links, especially a radio link between the user equipment and a radio access network and, unless both endpoints are in the same radio access network, at least one further link denoted as core link below. A common control node of the communication system is adapted to initiate the establishment of the radio link to the user equipment for different types of radio access networks. Generally the common control node sends a corresponding message to a controller in the respective radio access network, e.g. to an RNC or a BSC, to establish the connection. Furthermore, the common control node is adapted to provide a routing information for the establishment of the core link to a further control node. In customary communication networks, the routing information is requested for this purpose by a corresponding message from a location register storing an address of a present control node in which the user equipment is registered. The location register in turn forwards the requested routing information to the further control node.

The further control node initiates the establishment of at least the core link of the connection, optionally of some or all further links. The further control node can either establish the corresponding links or send control messages to other nodes which establish the links. The further control node initiates the establishment of the core link according to the routing information. According to the invention, the core link can be established with different transport bearers. The common control node determines the type of radio access network for the radio link and provides the routing information according to the determined type of radio access network. The further control node then attributes the transport bearer of the core link according to the routing information.

The proposed method allows to upgrade an existing communication system with new types of access networks and traffic bearers in a simple and effective way. An optimum traffic bearer can be selected for a connection while existing equipment of the network can still be used. In this way the costs for the upgrade of a network are significantly reduced and a balanced load of the equipment can be achieved. For example if a GSM MSC is upgraded to carry also UMTS traffic, an ATM or IP based connectivity network can be used for the UMTS payload whereas the GSM traffic can be carried on a TDM based bearer in the core network. In this way the existing TDM based infrastructure can be used furthermore for GSM traffic.

In a preferred embodiment of the proposed method, a position of the user equipment within the coverage area of the communication system is determined according to location areas. Customary communication systems like GSM or UMTS systems administrate the location of the user equipment according to location areas with respective identifiers. It is possible that location areas overlap totally or partly. Different location areas are attributed to different types of radio access networks and the type of radio access network is then determined by the common control node from an identifier of a present location area of the user equipment, e.g. when the user equipment is paged for the setup of a connection and sends a paging response or after a location update. In this way, the type of the access network can easily be determined.

In a first alternative, different roaming numbers are selected for the routing information according to the determined type of radio access network. The further control node attributes the transport bearer according to the received roaming number. For the selection and attribution, the control nodes can store tables in which roaming numbers or groups of roaming numbers are related to specific bearers. This alternative allows a simple selection of an appropriate bearer while adaptations in control nodes are limited to the common control node and the further control node. Further adaptations can easily be performed for any further upgrades of the communication system.

In a second alternative, the routing information comprises a flag indicating the determined type of radio access network and the further control node attributes the transport bearer according to the flag. This embodiment is also very simple but requires that the flag, in addition to the roaming number, is forwarded to the further control node. Intermediate nodes or messages forwarding the routing information, for example an HLR (home location register) and messages through any further network require according modifications to transport the flag. The flag may either be a single bit in a message or memory or it can comprise several bits if more than two bearers need to be distinguished.

An advantageous common control node connects a core network of the communication system to at least two different types of radio access networks. For example, the common control node can be a 2G/3G MSC. This allows an effective control of different access networks.

In an embodiment of the proposed method, the further control node can be a transit node interconnecting the core network of the communication system to a further communication network. The further control node can be, e.g., a GMSC or a TSC. Depending on the endpoint of the connection, it is possible that the further node is not a transit node, i.e. the connection can also remain within the communication system.

For an appropriate selection of the bearer the determined type of the radio access network corresponds to its interface to other nodes in the communication system which may, but does not necessarily, correspond to the radio interface of the radio access network. The type of the radio access network can especially indicate a GSM or a UMTS radio access network (UTRAN).

Within these and other radio access networks, a further subdivision of radio access bearers for different types of connections like voice calls or data connections is known. It can be advantageous, e.g. for an effective handling traffic, to amend the type of the radio access network indicated in the routing information by the type of the radio access bearer so that the core network bearer can be optimally adjusted to the connection requirements. For example if a connection requires a high bandwidth an appropriate core bearer can be selected if the type of the radio access network comprises an access bearer type.

The transport bearer can for example be selected from a group comprising ATM bearers, IP bearers and TDM bearers.

It is possible that one or more control nodes in the proposed method perform both the control of a connection and the handling of the payload as a customary 2G MSC. The method is, however, especially suitable for a communication system with a layered architecture which allows a separate handling of the connection control and the bearer establishment. In this case at least one link of the connection is established to a media gateway which handles the payload of the connection and which is controlled by one or more of the control nodes.

A preferable communication system is adapted to perform a method according to any of the above embodiments.

The foregoing and other objects, features and advantages of the present invention will become more apparent in the following detailed description of preferred embodiments as illustrated in the accompanying drawings.

### Brief description of the drawings

- Fig. 1: shows a communication system in which a method according to the invention is performed
- Fig. 2: shows a communication system with ATM and TDM bearers in which a media gateway provides an interface to a further network
- Fig. 3: shows a communication system with ATM and TDM bearers in which a TSC or GMSC provides an interface to a further network
- Fig. 4: illustrates the forwarding of routing information in the configuration of figure 2.

### Detailed description of preferred embodiments of the invention

In the figures, broken lines indicate signaling, i.e. call control links, dotted lines indicate payload links on a first transport bearer, e.g. TDM links, and continuous lines indicate payload links on a second transport bearer, e.g., on an ATM or IP bearer. A dot in a node indicates a transcoder TR which adapts the speech coding in a connection according to the specification requirements. All figures illustrate two connection options which can be selected alternatively, one denoted 3G connection and the other one denoted 2G connection below. The corresponding call control and transport bearers are indicated by 2G and 3G, respectively, in the figures.

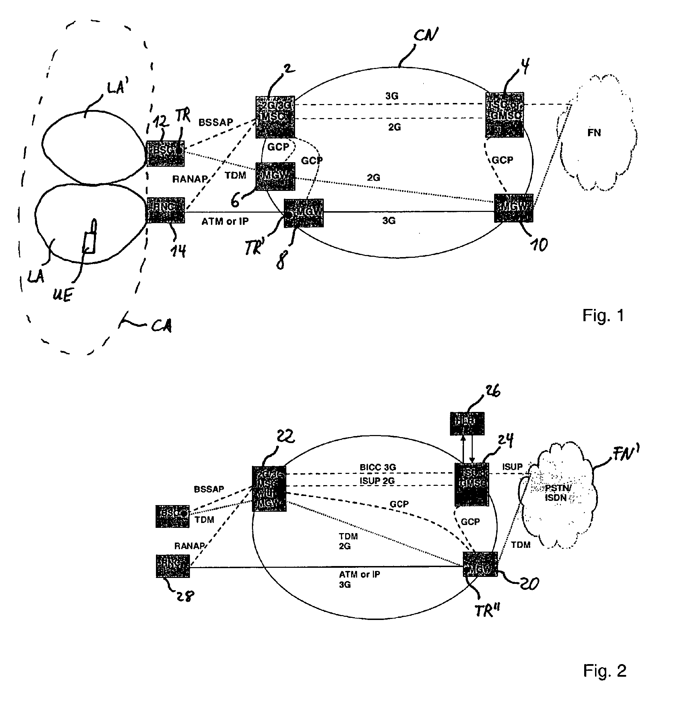

Figure 1 shows basic elements of a communication system in which a method according to the invention is performed. The coverage area CA of the communication system is subdivided into location areas LA, LA' through which a user equipment UE can move. Location areas may overlap and umbrella configurations are also possible in which one location area comprises another one. The communication system comprises a core network CN with control nodes 2, 4 and media gateways 6, 8, 10 for handling the payload of connections. The control nodes in the example are a combined 2G/3G MSC as common control node 2 and a TSC or a GMSC as further control node 4. The media gateways are controlled by the control nodes using a gateway control protocol GCP, e.g. H.248.

Connections to the user equipment UE are performed over different radio access networks 12, 14 indicated by the corresponding control nodes while further elements of the access networks, for example radio base stations, are omitted for clarity. In the example, the common control node 2 controls a BSC for a GSM access network via the BSSAP (Base Station System Application Part) protocol while a RNC in a UMTS access network is controlled by the RANAP (Radio Access Network Application Part) protocol, e.g. in order to initiate the establishment of radio links to the user equipment UE.

More specifically, figure 1 provides a general overview how a combined 2G/3G MSC can be used within a core network in which the GSM and UMTS traffic is carried on separate bearers. In order to route terminating GSM connections via TDM links and UMTS calls via ATM or IP links, the GMSC - or TSC in case of visiting user equipment - needs an information whether the connection will end in the user equipment via a GSM access network or a UMTS access network. For this purpose, separate location areas are defined for the GSM cells and for the UMTS cells, corresponding to the respective access networks. The present MSC of the subscriber, i.e. control node 2, can determine the type of access network from the location area. Generally, an MSC is combined with a visitor location register (VLR) for temporarily storing subscription data of users presently located in the region served by the MSC.

The GMSC, or TSC in case of visiting user equipment, uses a roaming number to route a call towards the terminating MSC/VLR. Two alternatives exist to provide the information which type radio access network is used to the TSC or GMSC. In a first alternative, the basic idea is to allocate the roaming number based on the location area. In this way, the MSC/VLR provides access related information to the GMSC or TSC to select the optimum bearer, i.e. the 2G or 3G route is selected based on the roaming number.

The following steps are carried out to route GSM traffic on ISUP/TDM links and UMTS traffic on BICC/ATM or BICC/IP links in the first alternative:
1. Separate location areas are defined for GSM cells and UMTS cells.
2. In the MSC/VLR roaming numbers are defined and allocated according to the location area.
3. The B-number analysis and routing analysis in control node 4, e.g. a GMSC or TSC, is defined to attribute ISUP/TDM routes for roaming number series allocated for GSM location areas and to attribute BICC/ATM or BICC/IP routes for roaming number series allocated for UMTS location areas.

In a second alternative the MSC/VLR stores a flag in the VLR to indicate whether the last location update of the user equipment UE was performed from a UMTS access network or from a GSM access network. The MSC/VLR provides this flag as well as a roaming number to the HLR when the latter requests routing information, e.g. with the MAP message 'Provide Roaming Number'. The HLR forwards the flag and the roaming number to the GMSC, e.g. with the MAP message 'Send Routing Info', and the GMSC uses the flag to determine a suitable route towards the terminating MSC/VLR. Thus the GMSC can select e.g. an ISUP/TDM link for GSM traffic or a BICC/ATM link for UMTS traffic according to the flag.

The second alternative has larger impacts on the communication system than the first one because for visiting subscribers also the call control protocol (e.g. ISUP) needs to carry the flag via the home HLR of the subscriber and his home GMSC to the TSC at the edge of the visited PLMN (Public Land Mobile Network). Therefore, the transport of the flag must be ensured both in the home and visited networks of the subscriber and in any intermediate network transporting the routing information.

In both alternatives, for a connection originating from a further network FN, a signaling, e.g., ISUP link for controlling the call is established to control node 4 at the edge of the core network while the payload is routed, e.g. on a TDM link, to media gateway 10, also located at the edge of the core network and being controlled by control node 4 via a GCP protocol. According to the determined type of radio access network, control node 4 performs either a 2G signaling or a 3G signaling to common control node 2, controlling both radio access networks 12, 14 as well as media gateways 6, 8. For a 2G radio access network, a 2G bearer is selected through the core network to media gateway 6 and further to radio access network 12. For 3G radio access network 14, a 3G bearer is selected to media gateway 8 and further, after transcoding in transcoder TR', to the RNC of the radio access network 14.

In the following examples one bearer in the core network CN is TDM and another one is ATM or IP. There are, however, no changes on this level of description for any other types of bearers.

Fig. 2 shows a communication system in which a media gateway 20 (MGW) provides an interface to a PSTN/ISDN (Public Switched Telecommunications Network/Integrated Services Digital Network) as further network FN'. Different traffic options for terminating calls exist in the core network. GSM traffic is carried on ISUP/TDM links and UMTS traffic on BICC/ATM or BICC/IP links. In contrast to figure 1, the common control node 22 is integrated with an MGW so that in the 2G case both the ISUP signaling and the 2G bearer is established over common control node 22. For a 3G connection only the BICC signaling is performed to common control node 22 which controls also media gateway 20. Because the necessary transcoding is already performed in transcoder TR" of media gateway 20, the latter can be connected to the RNC of the radio access network 28 without an intermediate MGW. Therefore, media gateway 20 is controlled simultaneously by the common and the further control node 22, 24. In case that the further control node 24 is a GMSC, an HLR 26 can forward the required routing information for the connections as provided by common control node 22.

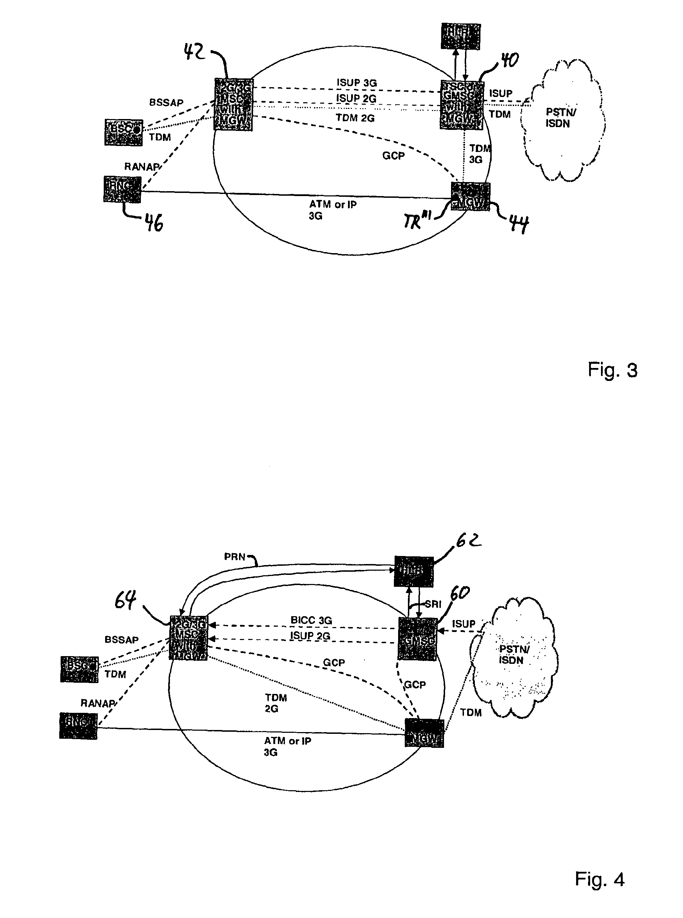

Figure 3 shows a scenario where the signaling from the further network is terminated by a TSC or GMSC as further control node 40, i.e. the TSC or GMSC, which provides an interface to a PSTN/ISDN over which also the payload is routed. In the 2G case, ISUP signaling and payload are sent to the common control node 42 as indicated by 2G at the corresponding links in figure 3. If a 3G bearer is attributed in further control node 40, only an ISUP 3G signaling is performed with common control node 42. The 3G payload is sent on a 3G TDM bearer to media gateway 44 and after transcoding in transcoder TR''' on an ATM 3G link to the RNC of the radio access network 46.

The above examples for the first alternative are also valid for the second alternative with the difference that, instead of a roaming number allocation based on location areas, the selection of the outgoing bearer in the GMSC or TSC is based on the flag indicating the access type. The same roaming number can then be provided for a user equipment in a GSM and in a UMTS access network.

Figure 4 describes a traffic case example how a mobile terminating call for a home subscriber is handled in the GMSC and 2G/3G MSC/VLR nodes. In case of a subscriber roaming in another network a TSC handles the call instead of the GMSC at the interface to the PSTN/ISDN according to routing information provided from a GMSC in the home network of the subscriber.

During the initialization of the communication system, GSM cells and UMTS cells are attributed to different location areas. During the establishment of a call, an ISUP initial address message is received by the GMSC 60 at the edge of the core network from the PSTN/ISDN. The GMSC then sends the message 'Send Routing Info' SRI to the HLR 62 of the subscriber. The HLR 62 sends a message 'Provide Roaming Number' PRN to the terminating MSC/VLR 64 which is identified in a record for the subscriber in the HLR as his presently serving MSC/VLR.

For the first above alternative, the MSC/VLR 64 allocates the roaming number based on the location area, and provides it to the HLR 62 in a reply to message PRN. In the second alternative, the MSC/VLR includes a flag according to the access network into the reply to the HLR as well as a roaming number which can then be independent of the access network. The HLR provides the roaming number and, optionally, the flag to the GMSC.

The GMSC performs the B-number and routing analysis. For a GSM terminating call, an ISUP route is selected with a TDM bearer whereas for the UMTS terminating call BICC route is selected with an ATM bearer. In the first alternative this information is derived from the roaming number in the number analysis while it is derived from the flag in the second alternative.

All the above examples show connections originating from a further network FN. However, it is obvious to a skilled person that a connection may also originate in the same communication system, e.g. from a further radio access network with the GMSC controlling the access from the further radio access network, or from another PLMN as further network. Also, all links to the further network in the examples are ISUP/TDM links while any other combination of protocols, e.g. BICC/ATM, may be used for this link if both the communication system and the further network are adapted to handle the protocols.

The above embodiments admirably achieve the objects of the invention. However, it will be appreciated that departures can be made by those skilled in the art without departing from the scope of the invention which is limited only by the claims.

## Claims

1. Method for the establishment of a connection in a mobile communication system with a user equipment (UE), wherein the connection with the user equipment (UE) comprises at least a radio link between the user equipment and a radio access network and a core link, wherein a first control node (4) initiates the establishment of the core link according to a routing information, wherein the core link can be established with different transport bearers and the first control node (4) attributes the transport bearer of the core link according to the routing information,
**characterized in that**
the user equipment (UE) is adapted to connections over different types of radio access networks (12, 14),
a common control node (2) in a core network of the communication system initiates the establishment of the radio link to the user equipment (UE) for the different types of radio access networks (12, 14) and controls connections with the different transport bearers,
and the common control node (2) determines the type of radio access network (12, 14) for the radio link and provides the routing information according to the determined type of radio access network (12, 14) to the first control node (4).

2. Method according to claim 1, wherein a position of the user equipment (UE) within the coverage area of the communication system is determined according to a location area (LA), different location areas (LA, LA') are attributed to different types of radio access networks (12, 14) and the type of radio access network (12, 14) is determined by the common control node (2) from an identifier of a present location area of the user equipment.

3. Method according to claim 1 or 2, wherein different roaming numbers are selected for the routing information according to the determined type of radio access network (12, 14) and the further control node (4) attributes the transport bearer according to the received roaming number.

4. Method according to claim 1 or 2, wherein the routing information comprises a flag indicating the determined type of radio access network (12, 14) and the further control node (4) attributes the transport bearer according to the flag.

5. Method according to any preceding claim, wherein the common control node (2) connects a core network of the communication system to at least two different types of radio access networks (12, 14).

6. Method according to any preceding claim, wherein the further control node (4) is a transit node interconnecting a core network (CN) of the communication system to a further communication network.

7. Method according to any preceding claim, wherein the type of the radio access network (12, 14) indicates a GSM or a UMTS radio access network.

8. Method according to any preceding claim, wherein the type of the radio access network (12, 14) comprises an access bearer type.

9. Method according to any preceding claim, wherein the transport bearer is selected from a group comprising ATM bearers, IP bearers and TDM bearers.

10. Method according to any preceding claim, wherein at least one link of the connection is established to a media gateway (6, 8, 1.0) which handles the payload of the connection and which is controlled by at least one of the control nodes (2, 4).

11. Common control node for a mobile communication system with a user equipment (UE), wherein a connection with the user equipment (UE) comprises at least a radio link between the user equipment and a radio access network and a core link, wherein a first control node (4) is adapted to initiate the establishment of the core link according to a routing information, wherein the core link can be established with different transport bearers and the first control node (4) is adapted to attribute the transport bearer of the core link according to the routing information, **characterized in that**
the mobile communication system comprises user equipment (UE) adapted to connections over different types of radio access networks (12, 14),
the common control node (2) is within a core network of the communication system and adapted to initiate the establishment of the radio link to the user equipment (UE) for different types of radio access networks (12, 14) and adapted to control connections with the different transport bearers,
and the common control node (2) is adapted to determine the type of radio access network (12, 14) for the radio link and to provide the routing information according to the determined type of radio access network (12, 14) to the first control node (4).

12. Mobile communication system with a user equipment (UE), wherein a connection with the user equipment (UE) comprises at least a radio link between the user equipment and a radio access network and a core link, wherein a first control node (4) is adapted to initiate the establishment of the core link according to a routing information, wherein the core link can be established with different transport bearers and the first control node (4) is adapted to attribute the transport bearer of the core link according to the routing information, **characterized in that**
the user equipment (UE) is adapted to connections over different types of radio access networks (12,14),
a common control node (2) in a core network of the communication system is adapted to initiate the establishment of the radio link to the user equipment (UE) for different types of radio access networks (12, 14) and to control connections with the different transport bearers,
and the common control node (2) is adapted to determine the type of radio access network (12, 14) for the radio link and is adapted to provide the routing information according to the determined type of radio access network (12, 14) to the first control node (4).

## Patentansprüche

1. Verfahren zur Herstellung einer Verbindung in einem Mobilkommunikationssystem mit einer Teilnehmereinrichtung (UE), wobei die Verbindung mit der Teilnehmereinrichtung (UE) wenigstens eine Funkverbindung zwischen der Teilnehmereinrichtung und einem Funkzugangsnetz und einen Kernverbindungsabschnitt umfasst, wobei ein erster Steuerknoten (4) die Herstellung des Kernverbindungsabschnitts gemäß Leitweginformationen einleitet, wobei der Kernverbindungsabschnitt mit verschiedenen Transportträgern hergestellt werden kann, und der erste Steuerknoten (4) den Transportträger des Kernverbindungsabschnitts gemäß den Leitweginformationen zuordnet, **dadurch gekennzeichnet, dass**
die Teilnehmereinrichtung (UE) für Verbindungen über verschiedene Typen von Funkzugangsnetzen (12, 14) ausgelegt ist,
ein gemeinsamer Steuerknoten (2) in einem Kernnetz des Kommunikationssystems die Herstellung der Funkverbindung zur Teilnehmereinrichtung (UE) für verschiedene Typen von Funkzugangsnetzen (12, 14) einleitet und Verbindungen mit den verschiedenen Transportträgern steuert,
und der gemeinsame Steuerknoten (2) den Typ von Funkzugangsnetz (12, 14) für die Funkverbindung bestimmt und die Leitweginformationen gemäß dem bestimmten Typ von Funkzugangsnetz (12, 14) dem ersten Steuerknoten (4) zur Verfügung stellt.

2. Verfahren nach Anspruch 1, wobei eine Position der Teilnehmereinrichtung (UE) innerhalb des Versorgungsbereichs des Kommunikationssystems gemäß einem Aufenthaltsgebiet (LA) bestimmt wird, verschiedene Aufenthaltsgebiete (LA) verschiedenen Typen von Funkzugangsnetzen (12, 14) zugeordnet werden, und der Typ von Funkzugangsnetz (12, 14) durch den gemeinsamen Steuerknoten (2) aus einer Kennung eines aktuellen Aufenthaltsgebiets der Teilnehmereinrichtung bestimmt wird.

3. Verfahren nach Anspruch 1 oder 2, wobei verschiedene Roaming-Nummern für die Leitweginformationen gemäß dem bestimmten Typ von Funkzugangsnetz (12, 14) ausgewählt werden, und der weitere Steuerknoten (4) den Transportträger gemäß der empfangenen Roaming-Nummer zuordnet.

4. verfahren nach Anspruch 1 oder 2, wobei die Leitweginformationen ein Flag umfassen, das den bestimmten Typ von Funkzugangsnetz (12, 14) anzeigt, und der weitere steuerknoten (4) den Transportträger gemäß dem Flag zuordnet.

5. Verfahren nach einem der vorhergehenden Ansprüche, wobei der gemeinsame Steuerknoten (2) ein Kernnetz des Kommunikationssystems mit wenigstens zwei verschiedenen Typen von Funkzugangsnetzen (12, 14) verbindet.

6. Verfahren nach einem der vorhergehenden Ansprüche, wobei der weitere Steuerknoten (4) ein Durchgangsknoten ist, der ein Kernnetz (CN) des Kommunikationsnetzes mit einem weiteren Kommunikationsnetz verbindet.

7. Verfahren nach einem der vorhergehenden Ansprüche, wobei der Typ von Funkzugangsnetz (12, 14) ein GSM-oder ein UMTS-Funkzugangsnetz anzeigt.

8. Verfahren nach einem der vorhergehenden Ansprüche, wobei der Typ von Funkzugangsnetz (12, 14) einen Zugangsträgertyp umfasst.

9. Verfahren nach einem der vorhergehenden Ansprüche, wobei der Transportträger aus einer Gruppe ausgewählt wird, die ATM-Träger, IP-Träger und TDM-Träger umfasst.

10. Verfahren nach einem der vorhergehenden Ansprüche, wobei wenigstens ein Verbindungsabschnitt der Verbindung zu einem Media-Gateway (6, 8, 10) hergestellt wird, welches die Nutzlast der Verbindung verarbeitet und welches durch wenigstens einen der Steuerknoten (2, 4) gesteuert wird.

11. Gemeinsamer Steuerknoten für ein Mobilkommunikationssystem mit einer Teilnehmereinrichtung (UE), wobei eine Verbindung mit der Teilnehmereinrichtung (UE) wenigstens eine Funkverbindung zwischen der Teilnehmereinrichtung und einem Funkzugangsnetz und einen Kernverbindungsabschnitt umfasst, wobei ein erster Steuerknoten (4) ausgelegt ist, die Herstellung des Kernverbindungsabschnitts gemäß Leitweginformationen einzuleiten, wobei der Kernverbindungsabschnitt mit verschiedenen Transportträgern hergestellt werden kann, und der erste Steuerkrioten (4) so ausgelegt ist, dass er den Transportträger des Kernverbindungsabschnitts gemäß den Leitweginformationen zuordnet, **dadurch gekennzeichnet, dass**
das Mobilkommunikationssystem eine Teilnehmereinrichtung (UE) umfasst, die für Verbindungen mit verschiedenen Typen von Funkzugangsnetzen (12, 14) ausgelegt ist,
der gemeinsame Steuerknoten (2) innerhalb eines Kernnetzes des Kommunikationssystems ist und so ausgelegt ist, dass er die Herstellung der Funkverbindung zur Teilnehmereinrichtung (UE) für verschiedene Typen von Funkzugangsnetzen (12, 14) einleitet, und so ausgelegt ist, dass er Verbindungen mit verschiedenen Transportträgern steuert,
und der gemeinsame Steuerknoten (2) so ausgelegt ist, dass er den Typ von Funkzugangsnetz (12, 14) für die Funkverbindung bestimmt und die Leitweginformationen gemäß dem bestimmten Typ von Funkzugangsnetz (12, 14) dem ersten Steuerknoten (4) zur Verfügung stellt.

12. Mobilkommunikationssystem mit einer Teilnehmereinrichtung (UE), wobei eine Verbindung mit der Teilnehmereinrichtung (UE) wenigstens eine Funkverbindung zwischen der Teilnehmereinrichtung und einem Funkzugangsnetz und einen Kernverbindungsabschnitt umfasst, wobei ein erster Steuerknoten (4) so ausgelegt ist, dass er die Herstellung des Kernverbindungsabschnitts gemäß Leitweginformationen einleitet, wobei der Kernverbindungsabschnitt mit verschiedenen Transportträgern hergestellt werden kann, und der erste Steuerknoten (4) so ausgelegt ist, dass er den Transportträger des Kernverbindungsabschnitts gemäß den Leitweginformatlorien zuordnet, **dadurch** gekenntzeichnet, dass
die Teilnehmereinrichtung (UE) für Verbindungen über verschiedene Typen von Funkzugangsnetzen (12, 14) ausgelegt ist,
ein gemeinsamer Steuerknoten (2) innerhalb eines Kernnetzes des Kommunikationssystems so ausgelegt ist, dass er die Herstellung der Funkverbindung zur Teilnehmereinrichtung (UE) für verschiedene Typen von Funkzugangsnetzen (12, 14) einleitet und Verbindungen mit verschiedenen Transportträgern steuert,
und der gemeinsame Steuerknoten (2) so ausgelegt ist, dass er den Typ von Funkzugangsnetz (12, 14) für die Funkverbindung bestimmt, und so ausgelegt ist, dass er die Leitweginformationen gemäß dem bestimmten Typ von Funkzugangsnetz (12, 14) dem ersten Steuerknoten (4) zur Verfügung stellt.

## Revendications

1. Procédé d'établissement d'une connexion dans un système de communication mobile avec un équipement d'utilisateur (UE), dans lequel la connexion avec l'équipement d'utilisateur (UE) comprend au moins une liaison radio entre l'équipement d'utilisateur et un réseau d'accès radio et une liaison centrale, dans lequel un premier noeud de commande (4) amorce l'établissement de la liaison centrale selon une information de routage, dans lequel la liaison centrale peut être établie avec différents supports de transport et le premier noeud de commande (4) attribue le support de transport de la liaison centrale selon l'information de routage,
**caractérisé en ce que**
l'équipement d'utilisateur (UE) est adapté à des connexions via différents types de réseaux d'accès radio (12,14),
un noeud de commande commun (2) dans un réseau central du système de communication amorce l'établissement de la liaison radio vers l'équipement d'utilisateur (UE) pour les différents types de réseaux d'accès radio (12,14) et commande les connexions avec les différents supports de transport,
et le noeud de commande commun (2) détermine le type de réseau d'accès radio (12,14) pour la liaison radio et fournit l'information de routage selon le type de réseau d'accès radio déterminé (12,14) au premier noeud de commande (4).

2. Procédé selon la revendication 1, dans lequel une position de l'équipement d'utilisateur (UE) à l'intérieur de 7,a zone de couverture du système de communication est déterminée selon une zone de positionnement (LA), différentes zones de positionnement (LA, LA') sont attribuées à différents types de réseaux d'accès radio (12,14) et le type de réseau d'accès radio (12,14) est déterminé par le noeud de commande commun (2) à partir d'un identifiant d'une zone de positionnement actuelle de l'équipement d'utilisateur.

3. Procédé selon la revendication 1 ou 2, dans lequel différents numéros itinérants sont sélectionnes pour l'information de routage selon le type déterminé de réseau d'accès radio (12,14) et le noeud de commande supplémentaire (4) attribue le support de transport selon le numéro itinérant reçu.

4. Procédé selon la revendication 1 ou 2, dans lequel l'information de routage comprend un fanion indiquant le type déterminé de réseau d'accès radio (12,14) et le noeud de commande supplémentaire (4) attribue le support de transport selon le fanion.

5. procédé selon une quelconque des revendications précédentes, dans lequel le noeud de commande commun (2) connecte un réseau central du système de communication à au moins deux types différents de réseaux d'accès radio (7,2,14).

6. Procédé selon une quelconque des revendications précédentes, dans lequel le noeud de commande supplémentaire (4) est un noeud de transit interconnectant un réseau central (CN) du système de communication à un réseau de communication supplémentaire.

7. Procédé selon une quelconque des revendications précédentes, dans lequel le type de réseau d'accès radio (12, 14) indique un réseau d'accès radio GSM ou UMTS.

8. Procédé selon une quelconque des revendications précédentes, dans lequel le type de réseau d'accès radio (12,14) comprend un type de support d'accès.

9. Procédé selon une quelconque des revendications précédentes, dans lequel le support de transport est sélectionné dans un groupe comprenant des supports ATM, des supports IP et des supports TDM.

10. Procédé selon une quelconque des revendications précédentes, dans lequel au moins une liaison de la connexion est établie vers une passerelle média (6,8,10) qui administre la charge utile de la connexion et qui est commandée par au moins un des noeuds de commande (2,4).

11. Noeud de commande commun pour système de communication mobile avec un équipement d'utilisateur (use), dans lequel une connexion avec l'équipement d'utilisateur (UE) comprend au moins une liaison radio entre l'équipement d'utilisateur et un réseau d'accès radio et une liaison centrale, dans lequel un premier noeud de commande (4) est adapté afin d'amorcer l'établissement de la liaison centrale selon une information de routage, dans lequel la liaison centrale peut être établie avec différents supports de transport et le premier noeud de commande (4) est adapté afin d'attribuer le support de transport de la liaison centrale selon l'information de routage,
**caractérisé en ce que**
le système de communication mobile comprend un équipement d'utilisateur (UE) adapté aux connexions via différents types de réseaux d'accès radio (12,14),
le noeud de commande commun (2) est à l'intérieur d'un noeud central du système de communication et adapté afin d'amorcer l'établissement de la liaison radio vers l'équipement d'utilisateur (UE) pour différents types de réseaux d'accès radio (12,14) et adapté afin de commander des connexions avec les différents supports de transport,
et le noeud de commande commun (2) est adapté afin de déterminer le type de réseau d'accès radio (12,14) pour la liaison radio et de fournir l'information de routage selon le type déterminé de réseau d'accès radio (12,14) vers le premier noeud de commande (4).

12. Système de communication mobile avec un équipement d'utilisateur (UE), dans lequel une connexion avec l'équipement d'utilisateur (UE) comprend au moins une liaison radio entre l'équipement d'utilisateur et un réseau d'accès radio et une liaison centrale, dans lequel un premier noeud de commande (4) est adapté afin d'amorcer l'établissement de la liaison centrale selon une information de routage, dans lequel à liaison centrale peut être établie avec différents supports de transport et le premier noeud de commande (4) est adapté afin d'attribuer le support de transport de la liaison centrale selon l'information de routage, **caractérisé en ce que**
l'équipement d'utilisateur (UE) est adapté aux connexions via différents types de réseaux d'accès radio (12,14),
un noeud de commande commun (2) dans un réseau central du système de communication est adapté afin d'amorcer l'établissement de la liaison radio vers l'équipement d'utilisateur (UE) pour différents types de réseaux d'accès radio (12,14) et de commander des connexions avec les différents supports de transport,
et le noeud de commande commun (2) est adapté afin de déterminer le type de réseau d'accès radio (12,14) pour la liaison radio et est adapté afin de fournir l'information de routage selon le type déterminé de réseau d'accês radio (12,14) vers le premier noeud de commande (4).
